Europäisches Patentamt

European Patent Office

Office européen des brevets

(11) Publication number: **0 252 630 B1**

## EUROPEAN PATENT SPECIFICATION

(45) Date of publication of patent specification: **18.08.93**    (51) Int. Cl.5: **H04J 3/07**

(21) Application number: **87305415.9**

(22) Date of filing: **18.06.87**

(54) Transmission system using forward error correction.

(30) Priority: **10.07.86 CA 513529**

(43) Date of publication of application:
**13.01.88 Bulletin 88/02**

(45) Publication of the grant of the patent:
**18.08.93 Bulletin 93/33**

(84) Designated Contracting States:
**AT DE FR GB NL SE**

(56) References cited:
**EP-A- 0 065 641**
**EP-A- 0 124 906**
**US-A- 4 224 473**

(73) Proprietor: **NORTHERN TELECOM LIMITED**
**600 de la Gauchetiere Street West**
**Montreal Ouebec H3B 4N7(CA)**

(72) Inventor: **Grover, Wayne Davy**
**8944 - 116 Street**
**Edmonton Alberto T6G 1P8(CA)**

(74) Representative: **Ryan, John Peter William et al**
**Northern Telecom Europe Limited, Patents**
**and Licensing, West Road**
**Harlow, Essex CM20 2SH (GB)**

Rank Xerox (UK) Business Services
(3.10/3.6/3.3.1)

EP 0 252 630 B1

**Description**

This invention relates to the processing (e.g. for transmission or storage) of information, and is particularly concerned with a transmission system using FEC (forward error correction).

Transmission systems are increasing being required to transmit digital information at higher bit rates and over increasing distances. To this end, optical transmission systems have been developed in which an optical signal from a source such as a laser is modulated with the digital information, for example at a rate of about 570Mb/s, and is transported via an optical fiber over a large distance, for example 40km or more.

It is a requirement in any transmission system to achieve a low error rate. In high speed optical transmissions, a major limiting factor in achieving a low error rate is dispersion. In order to minimise dispersion, it has been necessary to impose close tolerances on the optical signal source, to ensure that the optical signal has a narrow bandwidth centered at a wavelength at which the optical fiber used has a minimum dispersion.

In order to compensate for errors in transmission systems, it is known to use FEC (forward error correction). FEC involves the determination at the transmitter of an error control code, which is then transmitted with the digital information and used at the receiver to check for and correct errors which may have occurred in the transmission. FEC, which is particularly suited to the correction of single bit errors, thus involved no retransmission of the digital information. However, the need to transmit the error control code using FEC imposes an undesirable increase in the rate at which information must be transmitted, promoting incompatibility between systems which use FEC and systems which don't use FEC. Furthermore, this increase in information transmission rate makes it difficult and expensive to apply FEC to existing transmission systems to improve their performance.

FEC has been used in the applicants' optical fibre system FD565 currently in commercial use.

It is also known from US Patent 4,224,473 (Kaul et al) to utilise pulse stuffing to adjust data rates in TDMA systems.

An object of the invention, therefore, is to provide an improved method of processing information for example for transmission.

According to one aspect of this invention there is provided a method of processing information including fixed stuffed information, comprising the steps of replacing at least some fixed stuffed information with error control information.

Thus in accordance with this invention applied to the transmission of information (it could equally be applied to the storage of information, fixed stuffing information is replaced with forward error correction information, whereby forward error correction can be effected without any change in transmission speed and hence compatibly with existing transmission systems.

The invention further provides a method of processing information comprising the steps of: synchronising a data stream to an increased frequency using fixed stuffing; producing forward error correction (FEC) information from the data stream; and replacing at least some of the fixed stuffing information with the FEC information.

According to another aspect this invention provides a method of transmitting information comprising the steps of: processing information in respect of a plurality of data stream by the method as recited above, multiplexing the processed data streams together in time division multiplexed frames; and transmitting the multiplexed data stream.

The invention also provides apparatus comprising synchronising means for synchronising a data stream, the synchronising means including means for adding fixed stuffing information to the data stream; and means for replacing at least some of the fixed stuffing information with the FEC information.

According to a further aspect of this invention there is provided apparatus for transmitting a plurality of data streams comprising: synchronising means for each data stream for synchronising the data stream using fixed stuffing; means for multiplexing the synchronised data streams together for transmission in time division multiplexed frames; and, in respect of at least one of the data streams: forward error correction (FEC) means for producing FEC information from the respective synchronised data stream; and means for replacing at least some of the fixed stuffing information of the respective data stream with the FEC information.

In this respect it should be appreciated that in accordance with the invention FEC can be applied selectively to some data streams and not to others, even though all of the data streams are effectively multiplexed together for transmission, whereby a particularly low error rate can be achieved on the selected data streams. Such an advantageous arrangement is not possible in the prior art.

The FEC means preferably comprises means for producing an error control code in respect of a block of information of the respective data stream which is multiplexed in a plurality of said time division

2

multiplexed frames, and conveniently also includes timing means for synchronising each block of information of a respective data stream to said time division multiplexed frames.

Such synchronising is not, however, essential; the FEC information blocks may instead be unsynchronized with respect to the time division multiplexed frames. In this case, it is necessary at a receiver to identify the timing of the FEC information blocks for proper FEC operation. To this end, apparatus for effecting forward error correction (FEC) of a data stream including bits of error control codes periodically multiplexed therein, each error control code relating to a respective block of information of the data stream, can comprise: FEC decoding means for producing error correction information from blocks of information of the data stream; correcting means responsive to the error correction information to correct errors in the data stream; and control means responsive to the error correction information representing a high error rate for inhibiting the correction means and controlling the FEC decoding means to modify its timing of said blocks of information of the data stream; whereby operation of the FEC decoding means is synchronised to the blocks of information of the data stream in dependence upon the error correction information.

The invention will be further understood from the following description with reference to the accompanying drawings, in which:

Fig. 1 illustrates in a block diagram a known physical arrangement of a transmission system using FEC (forward error correction);

Fig. 2 illustrates a framing format of a known transmission system;

Fig. 3 illustrates in a block diagram an FEC encoding arrangement which operates in accordance with an embodiment of the invention.

Fig. 4 illustrates in a block diagram an FEC decoding arrangement which operates in accordance with an embodiment of the invention; and

Fig. 5 illustrates in a block diagram a modified FEC decoding arrangement which operates in a self-framing manner.

In order to provide a full understanding of the embodiments of the invention described below, it is first necessary to describe some aspects of a transmission system to which the invention is applied.

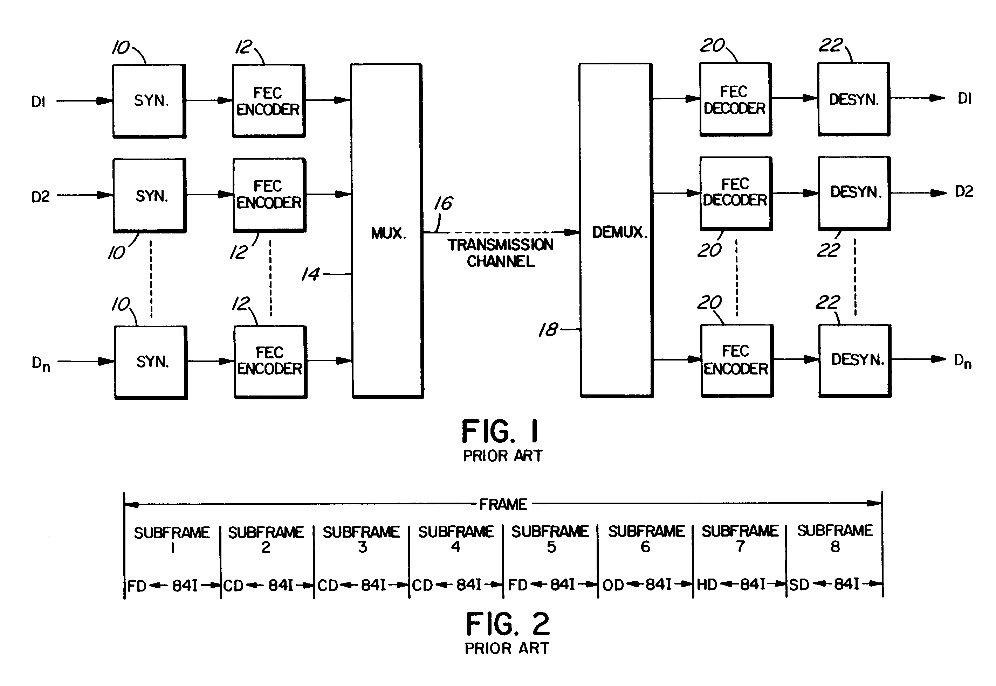

Referring to Fig. 1, parts of a high-speed transmission system are shown. Each of a plurality of incoming time division multiplexed data signals Dl to Dn is synchronised in a respective synchronizer 10 and supplied via a respective FEC encoder 12 to a common multiplexer 14, which multiplxes the FEC encoded data signals together for transmission over a high speed transmission channel 16. The channel 16 may, for example, comprise an optical signal modulator and transmitter, an optical fiber, and an optical signal receiver and demodulator which are not shown individually. A demultiplexer 18 demultiplexes the data signals for supply to respective data paths via respective FEC decoders 20 and desynchronizers 22.

In such a known arrangement, each FEC encoder 12 adds error control information to the data of the respective data channel, thereby increasing the bit rate of information supplied to the multiplexer 14 compared to the bit rate of information supplied by the respective synchronizer 10. In the corresponding FEC decoder 20, this error control information is used to correct errors in the transmitted channel data, and the error-corrected data is supplied to the respective desynchronizer 22 at a lower bit rate than that incoming to the FEC decoder 20.

Fig. 2 illustrates a framing format of a known transmission system in which FEC is not used; in other words the FEC encoders 12 and decoders 20 of Fig. 1 are not present, the outputs of the synchronizers 10 being supplied directly to the multiplexer 14 and the outputs of the demultiplexer 18 being supplied directly to the desynchronizers 22.

As illustrated in Fig. 2, each frame comprises 8 subframes each of 86 bits, the frame comprising a total of 688 bits. The first bit in each subframe constitutes system overhead information, and is a framing bit F in each of the subframes 1 and 5, one of three identical stuff indicator bits C in subframes 2 to 4, a high-speed communications bit H in subframe 7, a service channel bit S in subframe 8, and other overhead information O in subframe 6. The framing bits F not only identify the frame and subframe timing, but also the timing of masterframes each of which in this example comprises 12 frames. The stuff indicator bits C in each frame relate to a specific one of 12 data channels Dl to Dn (i.e. $n = 12$), whereby 3 bits C are provided for each data channel in each masterframe.

Each subframe also includes a second bit D and 84 information bits I. The bit rate of the framing format is selected so that each of the 12 data channels Dl to Dn can be constituted by a DS3 signal at a nominal rate of 44.736Mb/s. Seven bits of each of the 12 data channels are multiplexed together to form the 84 information bits in each subframe. This enables the 8 D bits in each frame collectively to accommodate a DS2 signal at a nominal bit rate of 6.312Mb/s.

However, it is also desirable for high-speed transmission systems to be able to accommodate higher bit-rate signals, for example so-called DS4E signals having a nominal bit rate of 139.264Mb/s, and multiplexed DS3 signals, which may already exist on "135Mb/s" fiber optical transmission systems, having a nominal bit rate of for example 135.51Mb/s. To this end, the bit rate is increased slightly so that groups of 3 of the data channels can be replaced by either of these higher bit-rate signals. In this example, the bit rate for the framing format is selected to be 570.48Mb/s.

As a result of this increase in bit rate, fixed stuffing, in addition to variable stuffing necessary to accommodate frequency tolerances, must be used to pad out the lower bit rate signal so that they are properly transmitted. The following table summarizes the various rates of transmission and stuffing for the signals discussed above.

| Signal | DS4E | 135Mb/s | DS3 | DS2 | |
|---|---|---|---|---|---|
| Nominal bit rate | 139.264 | 135.51 | 44.736 | 6.312 | Mb/s |
| Bits/subframe | 21 | 21 | 7 | 1 | |
| Allocated bit rate | 139.303 | 139.303 | 46.434 | 6.634 | Mb/s |
| Fixed stuff rate | 0 | 3.731 | 1.658 | 0.322 | Mb/s |
| Nominal variable stuff rate | 0.039 | 0.062 | 0.040 | 0 | Mb/s |

Thus fixed stuffing, i.e, stuffing in each frame, takes place for all but the DS4E signals. For the DS3 signal, this fixed stuffing is constituted by one of the 7 bits in each of subframes 2 and 6 of each frame for the respective channel being a stuff bit (2 bits/frame equals 1.658Mb/s). For the 135Mb/s signal, the fixed stuffing is constituted by one of the bits in each of subframes 2, 4, 6 and 8 in each frame, and one additional bit in every second frame, being a stuff bit.

Now in accordance with this invention, at least some of these fixed stuff bits are used to transmit FEC error control information for the respective channel. Thus the provision of an FEC decoder in this case avoids any increase in the bit rate of the signal to be handled by the demultiplexer, whilst still providing the necessary error control information. Thus FEC encoders and decoders can conveniently be added to existing transmitters and receivers, at relatively low cost. Furthermore, a receiver which has no FEC decoder can receive signals from a transmitter with an FEC encoder (without the advantages provided by the FEC, of course), because there is no change in transmitted bit rate or format and because the receiver discards the fixed stuff bits.

In the following description, for simplicity and clarity and by way of example, reference is made only to the application of FEC to DS3 signals. It should be appreciated that the same techniques are applicable to the 135Mb/s and DS2 signals, and to other signals in which fixed stuffing is used, and that the invention is equally applicable thereto.

From the above description, it can be seen that each DS3 channel provides 7 bits in each subframe, and hence 56 bits in each frame, of which 2 bits are fixed stuffing bits which can be used for FEC error control information. For single error correction, an N-bit error control code can indicate the position of a single error in, or indicate that there is no single error in, a block of up to $2^N$-1 bits. With 1 bit for an FEC error control code for every 28 bits of information, a value of $N = 8$ is reached before $2^N$-1 ($= 255$) is equal to or greater than Nx28 ($= 216$). Thus an 8-bit single error correcting FEC code can be used for correction of single errors in a block of 4 frames of data of a DS3 channel.

To this end, a (224,216) code (i.e. a block of 224 bits, comprising 216 information bits and 224-216 $= 8$ error control code bits, is protected by 8 error control code bits) is used. This is derived in known manner by shortening a (255,247) perfect cyclic code, the generator polynominal used being $X^8 + X^4 + X^3 + X^2 + 1$.

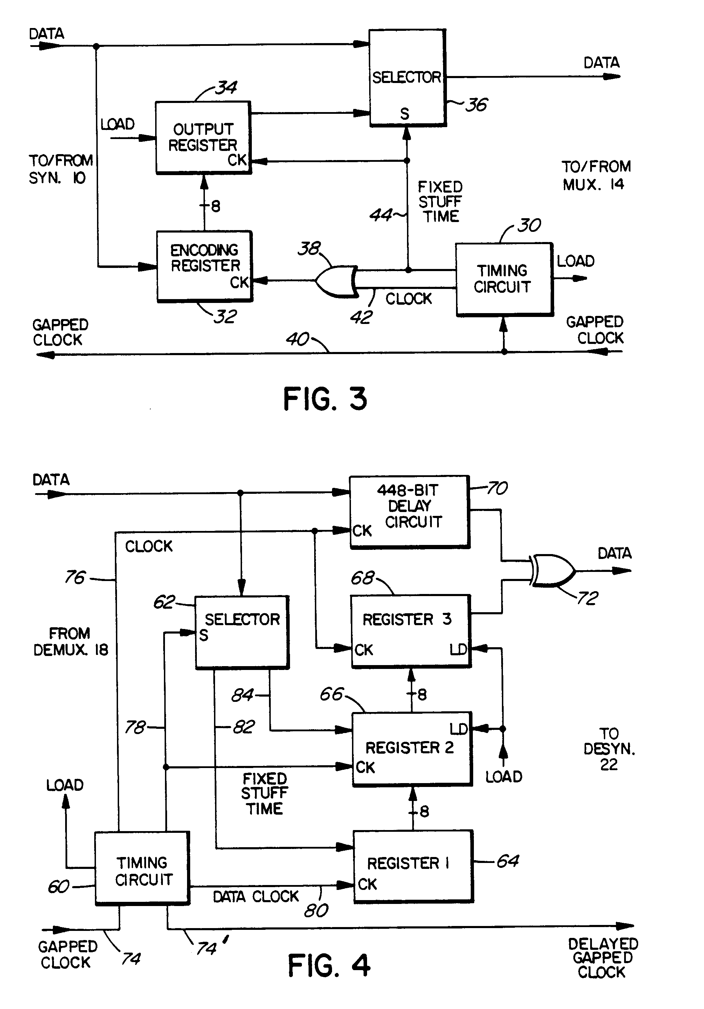

Fig. 3 illustrates an encoding arrangement for effecting the FEC encoding and replacing the fixed stuff bits with the error control bits. The encoding arrangement comprises a timing circuit 30, an 8-bit encoding register 32, an 8-bit output register 34, a data selector 36, and an OR gate 38. The timing circuit 30 serves to regenerate, from a 46.434MHz gapped clock signal supplied on a line 40 from the multiplexer 14 to the respective synchronizer 10, a 46.434MHz clock signal on a line 42 and a fixed stuff time signal on a line 44. These signals may instead be derived directly from the multiplexer 14 or synchronizer 10, in which case the timing circuit can be dispensed with.

The 46.434MHz clock signal, with the fixed stuff time clock pulses (occurring every 28th regular clock pulse) gated out by the gate 38, is applied to a clock input CK of the encoding register 32, to a serial input of which data incoming from the synchronizer 10 is supplied. The encoding register 32 implements the FEC encoding described above on a block of 216 data bits (including any variable stuff bits which for FEC purposes are treated in the same manner as data) but not on the fixed stuff bits within this block. At the end of this block, and hence after a time corresponding to 4 frames as shown in Fig. 2, under the control of a signal LOAD also produced by the timing circuit 30, the contents of the decoding register 32 are loaded into the output register 34. During the next 4 frames, under the control of the fixed stuff time signal on the line 44 which is supplied to a clock input CK of the output register 34 and to a select control input S of the selector 36, the 8-bit contents of the output register 34 are supplied via the selector 36 to the data output of the multiplexer 14 in place of the fixed stuff bits, while the incoming data is supplied to the encoding register 32 for generation of another 8-bit error control code.

Thus the error control code bits for each block of 216 data bits are transmitted in place of the fixed stuff bits in the next block of 216 data bits. These blocks can be, but as described below need not be, synchronized to the framing format described above by synchronizing the signal LOAD to this framing format.

Fig. 4 illustrates a corresponding FEC decoding arrangement, which includes a timing circuit 60; three 8-bit registers 64, 66 and 68, numbered 1 to 3 respectively, having clock inputs CK and parallel load control inputs LD, a 448-bit delay circuit 70, and an exclusive-OR gate 72. As in the encoder, in the decoder the timing circuit 60 is provided to regenerate from a gapped clock signal on a line 74 signal which could instead be derived from the demultiplexer 18 or the respective desynchronizer 22. These signals include a 46.434 MHz clock signal on a line 76 supplied to the clock inputs CK of the third register 68 and the delay circuit 70; a fixed stuff time signal, occurring every 28 clock pulses, on a line 78 supplied to the select control input S of the selector 62 and to the clock input CK of the second register 66; a data clock, corresponding to the clock signal on the line 76 with the fixed stuff time clock pulses removed, supplied on a line 80 to the clock input CK of the first register 64; and a signal LOAD, supplied to the inputs LD of the second and third registers 66 and 68, which is produced once every 224 clock pulses on the line 76.

The decoder operates on a pipeline processing basis. During a first clock of 224 bits, the 216 data bits occurring at other than the fixed stuff times are passed via the selector 62 and a line 82 to the first register 64, which implements the FEC decoding. At the end of this block, with the signal LOAD the 8-bit contents of the first register 64 are transferred to the second register 66, which is identical to the first register 64 and is clocked at the fixed stuff times to complete the FEC decoding on the respective FEC error control code bits in the next data block, which are supplied to this register 66 via the selector 62 and a line 84. At the same time, the first register 64 acts on another block of data bits as described above.

At the end of this second block of data, with the signal LOAD the contents of the first and second registers are transferred to the second and third registers, respectively, and the first data block then reaches the output of the delay circuit 70 at the same time that the third register 68 produced any necessary error correction pulses, whereby any signal error in the data block is corrected by the gate 72, from the output of which the corrected data is supplied to the respective desynchronizer 22. At the same time, the first and second registers 64 and 66 act on subsequent blocks of data as described above.

As the delay circuit 70 introduces a 448-bit delay in the data path to the desynchronizer, and the gapped clock signal on the line 74 includes not only gaps at the fixed stuff times but also at variable stuff times, the timing circuit 60 similarly delays the gapped clock by a 448-bit delay to supply a correspondingly delayed gapped clock signal on a line 74' to the desynchronizer 22.

The FEC decoder as described above operates in synchronism with the framing format of Fig. 2. In other words, successive 224-bit FEC frames correspond, for each DS3 channel, to the data in frames 1 to 4, 5 to 8, and 9 to 12 of the 12-frame masterframe already described. Whilst this is convenient for the particular FEC code and framing format used, it requires the supply of frame and masterframe signals (not shown) to the encoder and decoder for synchronization purposes. More significantly, such a convenient matching of FEC frames and system frames may not occur in a general situation with other FEC codes and framing formats.

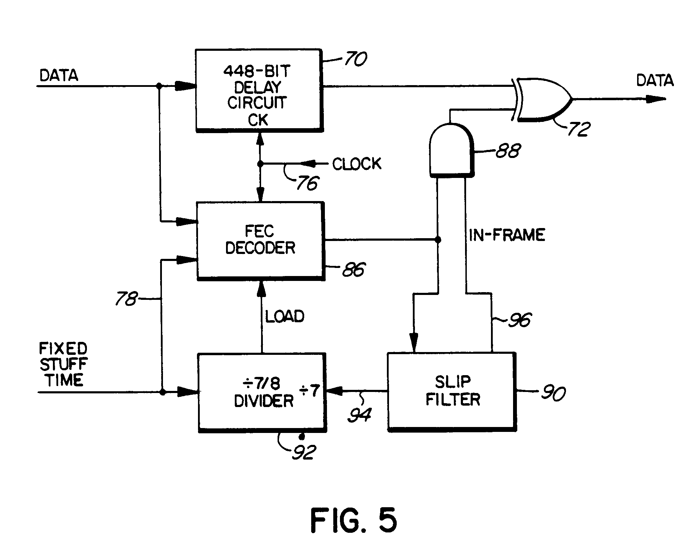

Accordingly, Fig. 5 illustrates a modified form of FEC decoder which is self-framing. In Fig. 5, for the sake of clarity and simplicity the timing circuit 60 of Fig. 4 is not shown, the selector 62 and registers 64, 66 and 68 of Fig. 4 are shown collectively in a single FEC decoder block 86, and other elements of the decoder of Fig. 4 are give the sale references in Fig. 5. In addition, the FEC decoder of Fig. 5 includes an AND gate 88, a slip filter 90, and a frequency divider 92.

The FEC decoder 86, delay circuit 70, and gate 72 in the decoder of Fig. 5 operate in exactly the same manner as in the decoder of Fig. 4, except that the error correction signal produced by the FEC decoder 86 and supplied to the gate 72 is now passed via the AND gate 88, and the signal LOAD is supplied by the frequency divider 92 instead of by the timing circuit.

The error correction signal produced by the FEC decoder 86 is also supplied to the slip filter 90, which can have a form known in the art of synchronization circuits and which selectively produces a slip control signal on a line 94 and an in-frame signal on a line 96. The frequency divider 92 is normally a -8 divider which produces the signal LOAD in response to 8 pulses of the fixed stuff time signal on the line 78, and hence every block of 224 incoming data bits. In response to the slip control signal on the line 94, the division factor of the divider 92 is changed to 7 whereby an FEC framing slip by one fixed stuff time pulse (i.e. 28 bits of incoming data) is effected in the timing of the signal LOAD.

In this manner, the FEC blocks of 224 data bits, and hence the FEC frames, are quickly identified from the fixed stuff time signal without dependence on any relationship of these blocks to the system frames and masterframes. After identification of the FEC frames in this manner, the slip filter produces the in-frame signal on the line 96 to enable the AND gate 88, whereby correction of single bit errors in the gate 72 is effected as already described. In the in-frame condition there is typically not more than one error per frame to be corrected, whereas in an out-of-frame condition the FEC decoder produces many correction bits per frame, whereby the slip filter 90 is able easily to distinguish between the two conditions.

It should be appreciated that the FEC framing acquisition time does not adversely affect the system frame acquisition time; the gate 88 is merely inhibited during the FEC frame acquisition time so that no error correction takes place. On the contrary, the in-frame signal on the line 96 can conceivable be used to facilitate acquisition of the system frame.

## Claims

1. A method of processing information characterised in that the method comprises the steps of:
   synchronizing (10) a data stream using fixed stuffing;
   producing error correction information (12, 32) from the data stream; and
   replacing (32,34,36,38) at least some of the fixed stuffing information with the error correction information.

2. A method as claimed in claim 1 characterised in that the error control information comprises forward error correction (FEC) information.

3. A method of transmitting information characterised by the steps of:
   processing information in respect of a plurality of data streams by the method of claim 2;
   multiplexing (14) the processed data streams together in time division multiplexed frames; and
   transmitting (16) the multiplexed data streams.

4. A method as claimed in claim 3 characterised in that for each data stream the FEC information comprises an error control code in respect of a block of information of the data stream which is multiplexed in a plurality of said time division multiplexed frames.

5. A method as claimed in claim 4 characterised in that for each data stream, said block of information comprises all of the information of the respective data stream contained in an integral number of said time division multiplexed frames.

6. Apparatus for processing information characterised in that there are provided:
   synchronizing means (10) for synchronizing a data stream, the synchronizing means including means for adding fixed positive stuffing information to the data stream;
   forward error correction (FEC) means (12, 32) for producing FEC information from the stuffed data stream; and
   means for replacing (32,34,36,38) at least some of the fixed stuffing information with the FEC information.

7. Apparatus for transmitting a plurality of data streams characterised in that there are provided:
   synchronizing means (10) for each data stream for synchronizing the data stream using fixed stuffing;
   means for multiplexing (14) the synchronized data streams together for transmission in time division multiplexed frames; and, in respect of at least one of the data streams;
   forward error correction (FEC) means (12, 32) for producing FEC information from the respective synchronized data stream; and
   means for replacing (32,34,36,38) at least some of the fixed stuffing information of the respective data stream with the FEC information.

8. Apparatus as claimed in claim 7 characterised in that the FEC means (12,32) comprises means for producing an error control code in respect of a block of information of the respective date stream which

6

is multiplexed in a plurality of said time division multiplexed frames.

9. Apparatus as claimed in claim 8 and including timing means (30) for synchronizing each block of information of a respective data stream to said time division multiplexed frames.

**Patentansprüche**

1. Verfahren zur Verarbeitung von Informationen,
dadurch gekennzeichnet, daß das Verfahren die folgenden Schritte umfaßt:
Synchronisieren (10) eines Datenstroms unter Verwendung eines festen Stopfens,
Erzeugen einer Fehlerkorrekturinformation (12, 32) aus dem Datenstrom, und
Ersetzen (32, 34, 36, 38) zumindestens eines Teils der festen Stopfinformation durch die Fehlerkorrekturinformation.

2. Verfahren nach Anspruch 1,
dadurch gekennzeichnet, daß die Fehlerkorrekturinformation eine Vorwwärts-Fehlerkorrektur-(FEC) Information umfaßt.

3. Verfahen zur Übertragung von Informationen,
gekennzeichnet durch die folgenden Schritte:
Verarbeitung von Informationen bezüglich einer Vielzahl von Datenströmen durch das Verfahren nach Anspruch 2,
Multiplexen (14) der verarbeiteten Datenströme zusammmen in Zeitmultiplex-Rahmen, und
Übertragung der Multiplex-Datenströme.

4. Verfahren nach Anspruch 3,
dadurch gekennzeichnet, daß für jeden Datenstrom die FEC-Information einen Fehlersteuercode bezüglich eines Blockes von Informationen des Datenstroms umfaßt, der in einer Vielzahl der Zeitmultiplexrahmen gemultiplext ist.

5. Verfahren nach Anspruch 4,
dadurch gekennzeichnet, daß für jeden Datenstrom der Informationsblock alle Information des jeweiligen Datenstroms umfaßt, die in einer ganzzahligen Anzahl der Zeitmultiplexrahmen enthalten ist.

6. Vorrichtung zur Verarbeitung von Information,
dadurch gekennzeichnet, daß
Synchronisationseinrichtungen (10) zur Synchronisation eines Datenstroms, wobei die Synchronisationseinrichtungen Einrichtungen zur Hinzufügung einer festen positiven Stopfinformation zu dem Datenstrom einschließen,
Vorwärtsfehlerkorrektur-(FEC) Einrichtungen (12, 32) zur Erzeugung von FEC-Information von dem gestopften Datenstrom, und
Einrichtungen zum Ersetzen (32, 34, 36, 38) zumindestens eines Teils der festen Stopfinformation durch die FEC-Information vorgesehen sind.

7. Vorrichtung zur Übertragung einer Vielzahl von Datenströmen,
dadurch gekennzeichnet, daß
Synchronisationseinrichtungen (10) für jeden Datenstrom zur Synchronisation des Datenstromes unter Verwendung eines festen Stopfens,
Einrichtungen zum Multiplexen (14) der synchronisierten Datenströme zusammmen für eine Übertragung in Zeitmultiplexrahmen, und, in Bezug auf zumindestens einen der Datenströme,
Vorwärts-Fehlerkorrektur-FEC-Einrichtungen (12, 32) zur Erzeugung von FEC-Information von dem jeweiligen synchronisierten Datenstrom, und
Einrichtungen zum Ersatz (32, 34, 36, 38) zumindestens eines Teils der festen Stopfinformation des jeweiligen Datenstroms durch die FEC-Information vorgesehen sind.

8. Vorrichtung nach Anspruch 7,
dadurch gekennzeichnet, daß die FEC-Einrichtungen (12, 32) Einrichtungen zur Erzeugung eines Fehlerkontrollcodes bezüglich eines Informationsblockes des jeweiligen Datenstroms umfassen, der in einer Vielzahl der Zeitmultiplexrahmen gemultiplext ist.

9. Vorrichtung nach Anspruch 8 unter Einschluß von Zeitsteuereinrichtungen (30) zur Synchronisation jedes Informationsblockes eines jeweiligen Datenstroms auf die Zeitmultiplex-Rahmen.

**Revendications**

1. Procédé de traitement d'informations, caractérisé en ce qu'il comprend les étapes suivantes :
   la synchronisation (10) d'un courant de données à l'aide d'un bourrage fixe,
   la production d'informations (12, 32) de correction d'erreur à partir du courant de données, et
   le remplacement (32, 34, 36, 38) d'une partie au moins des informations de bourrage fixe par les informations de correction d'erreur.

2. Procédé selon la revendication 1, caractérisé en ce que les informations de commande d'erreur comprennent des informations de correction d'erreur aval (FEC).

3. Procédé de transmission d'informations, caractérisé en ce qu'il comprend les étapes suivantes :
   le traitement des informations pour plusieurs courants de données par le procédé de la revendication 2,
   le multiplexage (14) des courants de données traités dans des blocs multiplexés temporellement, et
   la transmission (16) des courants multiplexés de données.

4. Procédé selon la revendication 3, caractérisé en ce que, pour chaque courant de données, les informations FEC comportent un code de commande d'erreur pour une séquence d'informations du courant de données qui est multiplexée dans plusieurs blocs multiplexés temporellement.

5. Procédé selon la revendication 4, caractérisé en ce que, pour chaque courant de données, le bloc d'informations comporte toutes les informations du courant respectif de données contenues dans un nombre entier de blocs multiplexés temporellement.

6. Appareil de traitement d'informations, caractérisé en ce qu'il comporte
   un dispositif (10) de synchronisation d'un courant de données, ce dispositif comprenant un dispositif destiné à ajouter des informations de bourrage fixe positif au courant de données,
   un dispositif (12, 32) de correction d'erreur aval (FEC) destiné à produire des informations FEC à partir du courant de données ayant subi le bourrage, et
   un dispositif (32, 34, 36, 38) destiné à remplacer certaines au moins des informations de bourrage fixe par des informations FEC.

7. Appareil de transmission de plusieurs courants de données, caractérisé en ce qu'il comporte :
   un dispositif (10) de synchronisation de chaque courant de données à l'aide d'un bourrage fixe,
   un dispositif (14) de multiplexage des courants synchronisés de données afin qu'ils soient transmis en blocs multiplexés temporellement et, pour au moins l'un des courants de données,
   un dispositif (12, 32) de correction d'erreur aval (FEC) destiné à produire des informations FEC pour le courant respectif de données synchronisées, et
   un dispositif (32, 34, 36, 38) de remplacement de certaines au moins des informations de bourrage fixe du courant respectif de données par des informations FEC.

8. Appareil selon la revendication 7, caractérisé en ce que le dispositif FEC (12, 32) comporte un dispositif destiné à produire un code de commande d'erreur en fonction d'une séquence d'informations du courant respectif de données qui est multiplexé dans plusieurs blocs multiplexés temporellement.

9. Appareil selon la revendication 8, comprenant un dispositif de minutage (30) destiné à synchroniser chaque séquence d'informations d'un courant respectif de données sur les blocs multiplexés temporellement.

**FIG. I**
PRIOR ART

**FIG. 2**
PRIOR ART

EP 0 252 630 B1

FIG. 3

FIG. 4

FIG. 5